# EUROPEAN PATENT APPLICATION

(11) **EP 4 744 899 A1**
(43) Date of publication of application: **20.05.2026**
(21) Application number: 24212877.5
(22) Date of filing: 14.11.2024
(51) Int. Cl.: B41J 2/21, B41J 25/00

(54) **A METHOD FOR DETERMINING PRINTHEAD DEVIATIONS IN A SCANNING PRINTER**

(71) Applicant: Canon Production Printing Holding B.V., 5914 HH Venlo (NL)
(72) Inventor: VAN BEKKEM, Johannes M, Venlo (NL)
(74) Representative: Canon Production Printing IP Department

(57) **Abstract**

An improved method for determining the positional deviations of nozzles in a printhead array using only a single test pattern is provided by means of the steps of:
- printing a test pattern, wherein preferably neighboring nozzles jet non-simultaneously;
- sensing the test pattern (30) to determine an array of detected droplet positions (37, 38);
- determining an array of nominal nozzle positions (41-45) based on the detected droplet positions (37, 38) and their respective jetting times;
- determining a common rotation deviation parameter (Rz1) corresponding to a rotation of the printhead array (1) with respect to a scanning direction (Y) based on the detected droplet positions (37, 38);
- transforming the array of nominal nozzle positions (41-45) to compensate for the common rotation deviation parameter (Rz1);
- determining positional deviations (dX', dY') of nozzles (21-26) in the printhead array (1) by comparing the transformed array of nominal nozzle positions (41-45) to a reference.

## Description

### BACKGROUND OF THE INVENTION

### 1. Field of the invention

The invention relates to a method of printing on a scanning inkjet printer, to such a printer, and to a computer program for performing such a method on such a printer.

### 2. Description of Background Art

A scanning inkjet printer may comprise a scanning printhead carriage, which is arranged to translate along a support beam to swath-wise print images on print media. Generally, the printhead carriage comprises multiple printheads provided in an array, which have been securely mounted onto the carriage. In practice, it may be that printheads are not fully accurately mounted onto the carriage, and thus are positioned at different angles with respect to one another. In addition, the carriage itself, or the common portion holding the printheads, may be mounted inaccurately, so that the printhead array as a whole may be slightly misaligned. In addition, the carriage itself, or the common portion holding the printheads, may be rotated dynamically using actuators. It is known to determine such misalignments or deviations by means of test patterns. A first test pattern is printed to determine any deviation of the printhead array as a whole. After correcting for this latter deviation, a second test pattern is printed which is used to determine any deviations between respective printheads within the array.

### SUMMARY OF THE INVENTION

It is an object of the invention to provide an improved method for determining printhead deviations in a scanning inkjet printhead, preferably a more time efficient method, specifically one which reduces the number of required test pattern prints.

In accordance with the present invention, a method of printing on a scanning inkjet printer according to claim 1, a printer according to claim 9, and a computer program according to claim 10 are provided.

The method comprises the steps of:
- printing a test pattern;
- sensing the test pattern to determine an array of detected droplet positions;
- determining an array of nominal nozzle positions based on the detected droplet positions and their respective jetting times;
- determining a common rotation deviation parameter corresponding to a rotation of the printhead array with respect to a scanning direction based on the detected droplet positions;
- transforming the array of nominal nozzle positions to compensate for the common rotation deviation parameter;
- determining positional deviations of nozzles in the printhead array by comparing the transformed array of nominal nozzle positions to a reference;
- printing an image, wherein the determined positional deviations of nozzles are corrected.

The positions of the jetted droplets are determined by sensing the printed test pattern by means of e.g. a suitable scanner and/or camera. The positions of the droplets are then converted into nominal nozzle positions, for example by projecting each droplet onto a frame wherein the carriage movement and jetting moments have been compensated. This nominal array is effectively a virtual representation of nozzle positions in the printhead array as derived from the droplet positions. In addition, the common rotation deviation parameter is determined, which corresponds to a misalignment angle between the printhead array and its scanning direction. In a basic example, the common rotation deviation parameter is the average angle of the nozzle rows in the nominal array, but other methods for determining this angle may be applied as well. The projected array of nominal nozzle position can then be transformed to correct for the determined common rotation deviation parameter, for example by virtually rotating the nominal array opposite but equal to the determined angle. The transformed nominal array then represents the nozzle positions, as these would be after the misalignment of the printhead array in its entirety would have been corrected. From the transformed nominal array, it is then possible to derive any positional deviations of individual nozzles by comparing each transformed nominal nozzle position to its reference, specifically its reference position. The reference position corresponds to the pre-scribed nozzle position, i.e. as it would be in case of zero deviation or misalignment. In this manner, deviations for each nozzle in two orthogonal directions (which generally are the horizontal directions) can be determined. This allows each deviation to be corrected, either by mechanically adjusted the printhead positions and/or by adjusting the printhead operation: pixels can be adjusted, assigned to other nozzles, and/or jetting times can be delayed to adjust the droplet position to compensate for the determined deviation. Only a single test pattern is required to both measure the common rotation deviation parameter and perform other measurements which need the respective common rotation deviation to be corrected, which results in an efficient method of printhead calibration. The solution is particularly advantageous when the printer is provided with an actuator to adjust the angle of the printhead array, as in that manner the printer may perform the corrections based on the test pattern without operator interference. Thereby the object of the present invention has been achieved.

More specific optional features of the invention are indicated in the dependent claims.

In an embodiment, the method further comprises rotating the printhead array proportional to the common rotation deviation parameter before the step of printing. The nominal nozzle positions are virtually rotated to correct for the misalignment of the printhead array in its entirety. This virtual rotation is matched by an actual rotation of the printhead array, such that the actual positions of the nozzle correspond to the nominal nozzle positions. By matching the actual correctional rotation with the virtual one, the determined deviations of the individual nozzles will be more accurate.

In an embodiment, neighboring nozzles jet non-simultaneously during the step of printing the test pattern. While printing the test pattern, the jetting of a nozzle is delayed with respect to that of its neighbor to avoid interference between neighboring nozzles.

In an embodiment, the test pattern comprises staggered arrays of droplets. The droplets are not jetted simultaneously, as each nozzle is delayed in firing with respect to its nearest neighbor. In a basic example, the nozzles jet one after another with a fixed interval in the order as defined by the nozzle row. In consequence, a staggered droplet array is formed. The test pattern is preferably formed of multiple of such array, one for each nozzle row of each printhead. A virtual line may be drawn through the centers of droplets in an array, which virtual line is at a non-zero angle with respect to the scanning and transport directions. The angle is determined by the carriage movement, the relative printhead-to-printhead rotations, and any rotation of the printhead array as a whole. The interaction of these latter factors prevents converting the droplet positions using a single rotation without negatively affecting the accuracy of determining individual nozzle deviations, at least when multiple rows of nozzle are used. The conversion to the nominal nozzle array in contrast does accurately transfer the deviation information with it, so that after the correctional rotation it is still accurate.

In an embodiment, each staggered array corresponds to at least one row of nozzles, and each staggered array comprises an identification marker positioned, shaped, and/or dimensioned different from other droplets in said staggered array. Each nozzle row comprises a pre-determined number of nozzles. At least one of these nozzles is controlled to jet a deviating droplet structure, which allows it be uniquely identified with respect to droplets from the other nozzles in the row. This allows each droplet from each nozzle row to be easily identified and grouped together. This allows for an improved accuracy in determining nozzle deviations. For example, a rotation or positional deviation in the entire nozzle row (or printhead) can thus be derived by grouping nozzles together. This grouping can applied in the nominal nozzle array and/or to the detected droplets and/or their positions. In an embodiment, the method further comprises the step of linking a staggered array to a row of nozzles based on the identification marker. Arrays can thus be linked to a certain nozzle row using the identification marker and optionally pre-stored information, such as the number of nozzles per row and/or the respective geometry of the nozzle rows.

In an embodiment, the step of determining the common rotation deviation parameter comprises determining a rotation center and a respective average rotation angle of the detected droplet positions with respect to the rotation center. A rotation is defined by its respective rotation center (or rotation axis). The rotation center can be determined in various ways, for example by calculating a weighted center of mass for all droplet positions, and/or a fitting by separately determining the average rotation angle and subsequently fitting and/or optimizing the position of the rotation center.

In an embodiment, the step of determining the array of nominal nozzle positions comprises calculating a nominal nozzle position from a respective detected droplet position wherein a velocity and scanning direction of the printhead assembly are applied. Every droplet position is converted to take into account the carriage movement between the jetting moment and the droplet landing on the print medium. In a basic example, the droplet position is adjusted by multiplying the carriage velocity by the time the jetting moment was delayed with respect to the firing of the first nozzle. The actual flight time of droplets may optionally be omitted or ignored, when assuming it is constant for all nozzles.

Another aspect of the present invention relates to a scanning printer comprising scanning printhead carriage, a detector for scanning a printed image, and a controller configured to perform the method according to any of the above mentioned embodiments.

Another aspect of the present invention relates to a computer program comprising instructions to cause the above described printer to execute the steps of the method according to any of the above mentioned embodiments.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic bottom view of a printhead array with two skewed printheads;
Fig. 2 is a schematic bottom view of the printhead array in Fig. 1 wherein the printhead array is skewed with respect to its scanning direction;
Fig. 3 is a schematic top view of a test pattern with droplet arrays deposited by the printhead array in Fig. 2;
Fig. 4 is a schematic diagram illustrating the conversion of detected droplet positions to nominal positions of the respective nozzles in the printhead array in Fig. 2;
Fig. 5 is a schematic representation of nominal nozzle arrays as determined from the test pattern in Fig. 3 using the conversion in Fig. 4;
Fig. 6 is a schematic representation of the nominal nozzle arrays in Fig. 5 after a virtual rotational correction for the determined skew angle of the printhead array illustrated in Fig. 2;
Fig. 7 is a schematic representation of comparing the determined positions of the rotated, nominal nozzle arrays in Fig. 6 to a reference to determine individual positional deviations per nozzle; and
Fig. 8 is a diagram illustrating the steps of a method of printing using the steps illustrated in Figs. 3 to 7.

### DETAILED DESCRIPTION OF THE PREFERRED EMBODIMENTS

The present invention will now be described with reference to the accompanying drawings, wherein the same reference numerals have been used to identify the same or similar elements throughout the several views.

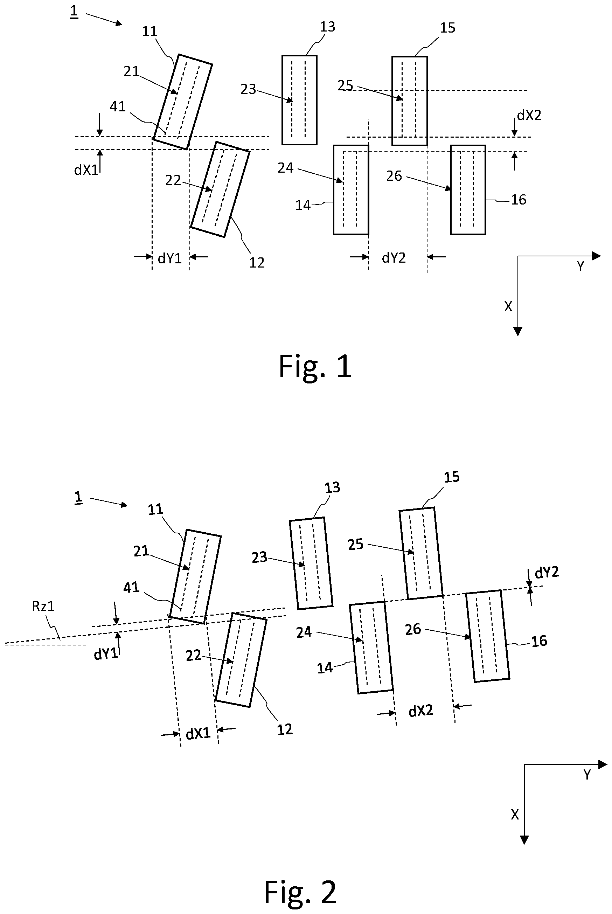

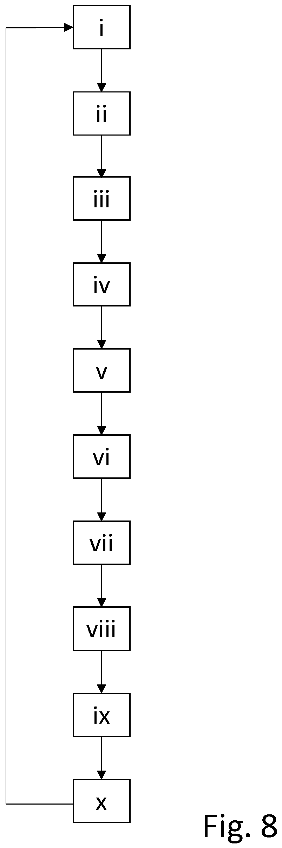

Fig. 1 illustrates a printhead array 1 of a scanning inkjet printer (not shown). Such a scanning inkjet printer generally comprises generally a beam or gantry along which a printhead carriage is able to reciprocate in a scanning direction to swath-wise print images on a print medium. The printer may be a flatbed printer, wherein print media are held in place by suction during and/or comprise a transport mechanism to move print media step-wise or continuously past the carriage beam. The printhead carriage is generally provided with a plurality of individual printheads 11-16, for example one printhead for each color. The printheads 11-16 are fixed to the carriage during use. In practice, it may occur that one or more printheads 11-16 are not properly aligned with respect to the other printheads 11-16 during installation in step i of the diagram in Fig. 8. In Fig. 1, the right four printheads 13-16 are properly aligned with respect to one another in both the transport and scanning directions X, Y. In the scanning direction Y, the distance dY2 or spacing between printheads 13-16 in that direction Y is constant, resulting in an equidistant configuration. In the transport direction X, printheads 13-16 are positioned, so that their nozzles 41 are aligned in the scanning direction Y, i.e. have the same X-position respectively. In addition, the distance between the first and respectively last nozzle 41 of different printheads 13-16 is set to have the same distance dX2 as between nozzles 41 on a single printhead 13-16.

In contrast, the left two printheads 11, 12 are not properly aligned with respect to the right four printheads 13-16 and have been rotated with respect to the other printheads 13-16. As a consequence, the distances dX1, dY1 between the printheads 11, 12 (and also with respect to the other printheads 13-16) are different from the previous distances dX2, dY2. The nozzle rows 21, 22 are not parallel and aligned with the other nozzle rows 23-26. It will be clear to the skilled person that without appropriate measures these deviations may results in print artifacts due to the deviating positioning of droplets from the skewed printheads 11, 12.

Fig. 2 illustrates that on top of deviating printhead-to-printhead positioning, the printhead array 1 in its entirety may also be misaligned with respect to the scanning direction Y. The printhead carriage in its entirely may be rotated slightly with respect to its beam, for example. In Fig. 2, the printhead array 1 is at a common rotation deviation angle Rz1with respect to the scanning direction Y.

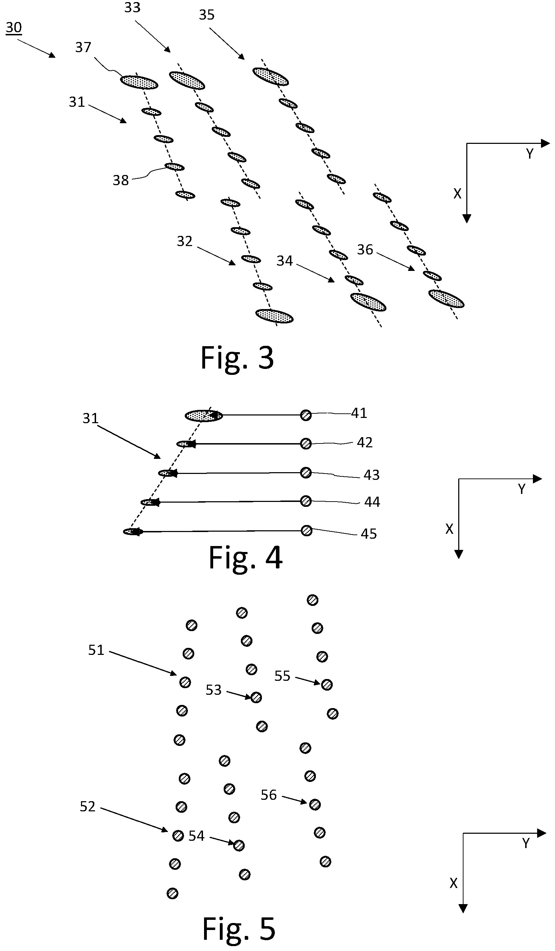

To achieve accurate positioning of the droplets from all nozzles 41, both the common rotation deviation angle Rz1 and the printhead-to-printhead deviations dX1, dY1 have to be corrected. Thereto, a test pattern 30 is printed in step ii, as illustrated in Fig. 3.

The test pattern 30 is formed as staggered droplet arrays 31-36. Each droplet arrays 31-36 is formed of a plurality of droplets 37, 38 jetted from different nozzles 41 of a nozzle row 21-16 of a respective printhead 11-16. In step iii, the jetting of each nozzle 41 is delayed with respect to its neighbors in the same row 21-16 to ensure reliable jetting of that nozzle 41, as simultaneous jetting is know interfere with the pressure generation at neighboring nozzles. The droplets 37, 38 are jetted as the carriage moves in the scanning direction Y, which results in a staggered pattern, with rows of droplets 37, 38 at a non-zero angle with respect to the scanning direction Y. The angle and position of each droplet array 31-36 is determined by the common rotation deviation angle Rz1 as well as by any deviations in the printhead-to-printhead alignment. Further, the speed of the carriage influences the angle of the droplet array 31-36. Note that each droplet array 31-36 corresponds to a respective nozzle row 21-26, for example one droplet 37-38 for each nozzle 41. In addition, a droplet array 31-36 may comprise an identification marker 37, which can be detected and analyzed to easily identify the respective nozzle row 21-26 from which the droplet array 31-16 originated. The identification marker 37 may be distinctive in shape, size, and/or position. It will further be appreciated that an identification marker may also be formed of a plurality of droplets or individual markers to form an identification pattern. The other droplets 38 may be formed from one or more jetted droplets. Additionally, it is noted that the droplets in the test pattern may be applied for specific purposes. For example, the test pattern may comprise a first pattern or array of identification markers specifically for identification of the respective nozzle rows. A second pattern may further be present specifically for determining the rotation deviation of the printhead array as a whole. The first and second pattern may comprise their specific identification markers.

In step iv, the printed test pattern 30 is scanned by an optical scanner, such as a camera or line scanner, to determine the individual positions of the jetted droplets 37, 38 on the print medium.

Fig. 4 illustrates the relationship between droplet position and nozzle 41-45. The different nozzles 41-45 in a single row fire at different moments in time. This is performed while the carriage moves at a known velocity in the scanning direction Y. The longer the period before a nozzle 41-45 is fired, the further the carriage will travel in that period. By storing the jetting moments for each individual nozzle (or applying a known interval), the relative positions of the nozzles 41-45 in the printhead array 1 can be deduced from the determined droplet position and the product of the period to jetting and the carriage velocity. In a basic example, the flight time of each droplet is assumed to be the same, and the calculations ignores this and is performed using only the delay in jetting times with respect to the first fired nozzle in a row. It will be appreciated that other methods for deriving the nozzle position may be applied as well, for example averaging measurements taken as the carriage moves in one direction with those taken as the carriage moves in the opposite direction. This bi-directional averaging has the advantages of averaging out variations in nozzle jetting speeds to a certain degree as well averaging out the rotation of the printhead array as a whole. In this manner the detected droplet positions are converted into nominal or virtual arrays 51-56 of nozzle positions in step v, as shown in Fig. 5. The nominal arrays 51-56 correspond to the relative positionings of the nozzles 41-45 in the printhead array 1 as derived from the detected droplet positions. Preferably, each nominal array 51-56 corresponds to a respective nozzle row 21-26.

In addition in step vi, the common rotation deviation angle Rz1 is determined. The positions of the nominal arrays 51-56 are averaged to determine a center of rotation, for example based on a (weighted) average or center of mass. In addition, the common rotation deviation angle Rz1 is determined for example by determining an average of the rotation angles of each nominal array 51-56. It will be appreciated various ways to obtain the common rotation deviation angle Rz1 are available to the skilled person, either based on an analysis of the nominal arrays 51-56 or a subset thereof, or alternatively via a separate measurement: any suitable mathematical method, such as weighing, fitting, averaging, etc. may be applied.

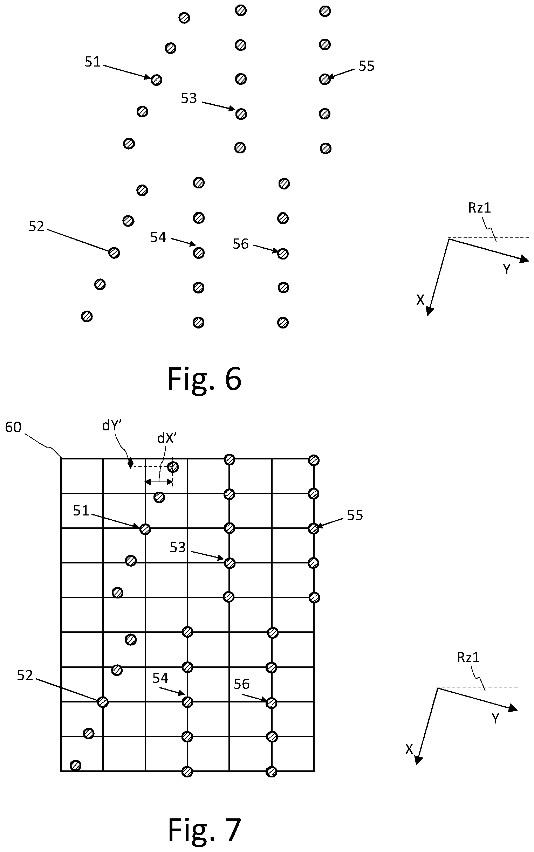

Using the common rotation deviation angle Rz1, the positions of the nominal arrays 51-56 may be transformed in step vii, so that these are effectively rotated by the determined common rotation deviation angle Rz1 around the determined center of rotation, as shown in Fig. 6. The determined common rotation deviation angle Rz1 is equal in size but opposite in direction to the angle shown in Fig. 2, so that the result is a (near) zero rotation deviation angle. This projects the nominal arrays 51-56 into an orientation, wherein the common rotation deviation angle Rz1 of the printhead array 1 would be approximately or near zero.

As shown in Fig. 7, the transformed nominal arrays 51-56 are compared to a reference 60, in step viii which corresponds to the prescribed nozzle positions. The reference 60 defines for each nozzle 41-45 a position with respect to the printhead array 1, as if the respective printhead 11-16 was mounted without deviations. The reference 60 is pre-stored in the controller's memory. For each individual nozzle 41-45 its deviations dX', dY' in the transport and scanning directions X, Y are determined and stored in step ix. The deviations dX', dY' may be expressed in any suitable format, such as µm, mm, µs, percentages, etc.

Prior or during printing of an image the deviation dX', dY' are corrected in step x. The determined deviations may be corrected in any number of ways. The determined common rotation deviation angle Rz1 may be corrected by rotating the carriage by corresponding, opposite angle. It will be appreciated that the determined common rotation deviation angle Rz1 may even vary for different positions of the carriage along the beam. The carriage may be provided with an actuator to adjust its rotation to compensate for variations in the common rotation deviation angle Rz1 at different location along the beam. In a simple example, a single common rotation deviation angle Rz1 is determined and the carriage is contra-rotated and then fixed. Various methods are available to correct the individual deviations dX', dY'. The present method advantageous derives the dX', dY', such as these will be after correcting the common rotation deviation angle Rz1. No additional test pattern or scan is required. Deviations dX', dY' can be fixed mechanically by adjusting the position and/or orientation of the printhead 11-16 in the printhead array 1. Non-zero deviations dY' in the scanning direction Y can be corrected by adjusting jetting timing of the corresponding nozzle 41-45. Firing of a droplet can be delayed or sped up, so that the droplet lands in the intended Y-position. Non-zero deviations dX' in the transport direction Y can be corrected by adjusting the digital image. Pixels in the image are shifted to compensate the deviations dX'. Colors and/or droplets sizes may be adjusted to ensure that at the respective X-position, an image resembling the respective pixel is printed.

The process i to x may be repeated whenever a printhead 11-16 is replaced or maintenance on the carriage or printheads has been performed. It will further be appreciated that the order in Fig. 8 is exemplary and that certain steps may be performed in different order and/or simultaneously.

In the above, please note that nominal herein is defined to an array set which have undergone a consistent conversion, for example based on a pre-defined algorithm or formula. Herein, in particular nominal applies to an array of position data points, which have projected onto an alternate system to adjust for the carriage movement and differences in jetting times. It will further be appreciated that average herein refers to any manner of averaging, including a weighted average.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method of printing on a scanning inkjet printer comprising the steps of:
- printing a test pattern; - sensing the test pattern (30) to determine an array of detected droplet positions (37, 38);
- determining an array of nominal nozzle positions (41-45) based on the detected droplet positions (37, 38) and their respective jetting times;
- determining a common rotation deviation parameter (Rz1) corresponding to a rotation of the printhead array (1) with respect to a scanning direction (Y) based on the detected droplet positions (37, 38);
- transforming the array of nominal nozzle positions (41-45) to compensate for the common rotation deviation parameter (Rz1);
- determining positional deviations (dX', dY') of nozzles (21-26) in the printhead array (1) by comparing the transformed array of nominal nozzle positions (41-45) to a reference;
- printing an image, wherein the determined positional deviations of nozzles (21-26) are corrected.

2. The method according to claim 1, further comprising rotating the printhead array (1) proportional to the common rotation deviation parameter (Rz1) before the step of printing.

3. The method according to any of the previous claims, wherein in the step of printing the test pattern neighboring nozzles jet non-simultaneously.

4. The method according to claim 3, wherein the test pattern comprises staggered arrays (31-36) of droplets (37, 38).

5. The method according to claim 4, wherein each staggered array (31-36) corresponds to at least one row (21-26) of nozzles (41-45), and each staggered array (31-36) comprises an identification marker (37) positioned, shaped, and/or dimensioned different from other droplets in said staggered array (31-36).

6. The method according to claim 5, further comprising the step of linking a staggered array (31-36) to a row (21-26) of nozzles (41-45) based on the identification marker (37).

7. The method according to any of the previous claims, wherein the step of determining a common rotation deviation parameter (Rz1) comprises determining a rotation center and a respective average rotation angle of the detected droplet positions (37, 38) with respect to the rotation center.

8. The method according to any of the previous claims, wherein the step of determining the array of nominal nozzle positions (41-45) comprises calculating a nominal nozzle position (41-45) from a respective detected droplet position (37, 38) wherein a velocity and scanning direction (Y) of the printhead assembly (1) are applied.

9. A scanning printer comprising scanning printhead carriage, a detector for scanning a printed image, and a controller configured to perform the method according to any of the previous claims.

10. A computer program comprising instructions to cause the printer of claim 9 to execute the steps of the method according to any of the claims 1 to 8.
